# EUROPEAN PATENT SPECIFICATION

(11) **EP 3 139 034 B1**
(45) Date of publication and mention of the grant of the patent: **11.04.2018**
(21) Application number: 16170809.4
(22) Date of filing: 23.05.2016
(51) Int. Cl.: F03D 80/70, F03D 80/50, F16C 17/00

(54) **REMOVAL OF A FRONT TOP SLIDING PAD OF A YAW BEARING OF A WIND TURBINE**
BESEITIGUNG EINER VORDEREN OBEREN GLEITPLATTE EINES TURMLAGERS EINER WINDTURBINE
RETRAIT D'UN PATIN DE GLISSEMENT SUPÉRIEUR AVANT D'UN PALIER DE LACET D'UNE ÉOLIENNE

(30) Priority: 02.09.2015 DE 102015216763
(43) Date of publication of application: 08.03.2017
(73) Proprietor: Siemens Aktiengesellschaft, 80333 München (DE)
(72) Inventor: Fjordgaard, Kristian, 7100 Vejle (DK); Nielsen, Rune, 7430 Ikast (DK); Nikolajsen, Jeppe Noes Buskbjerg, 8000 Aarhus C (DK); Soerensen, Soeren Kammer, 8700 Horsens (DK)

(56) References cited:
- EP-A1- 2 853 733
- JP-A- 2013 137 074
- US-A1- 2011 138 893
- US-A1- 2012 224 799

## Description

The present invention relates to a method of removing a front top sliding pad of a yaw bearing of a wind turbine. Furthermore, the invention relates to a method of exchanging such a front top sliding pad. Finally, the invention relates to a lifting wedge for carrying out the removal and exchange of such a front top sliding pad.

A modern horizontal axis wind turbine typically comprises a tower, a nacelle, a hub and a rotor with one or several rotor blades. The nacelle, the hub and the rotor form together an ensemble of the wind turbine which typically can be rotated about an axis which is substantially vertical. This rotational movement is referred to as a yawing movement. Consequently, the axis about which the ensemble comprising the nacelle, the hub and the rotor rotates is referred to as the yaw axis. The center of gravity of the ensemble comprising the nacelle, the hub and the rotor may be on the yaw axis or in close proximity of the yaw axis. Alternatively, the center of gravity may also be considerably separated from the yaw axis. Whether the first or the last alternative is the case depends a lot on the design and the type of the wind turbine.

Especially for wind turbines which feature a center of gravity which is at a certain distance from the yaw axis, large forces on the top sliding pads of the yaw bearing apply. These large forces particularly act on the front of the yaw bearing. The front of the yaw bearing refers to the part which is directed towards the hub of the wind turbine. Because of these large forces acting on the top sliding pads in the front of the yaw bearing, uneven wear occurs on the front top sliding pads.

A change of the front top sliding pads is extremely expensive and complex. According to the state of the art a lifting device such as a lifting crane lifts the ensemble comprising the nacelle, the hub and the rotor by a few millimeters or centimeters such that the front top sliding pads can be exchanged. However, using such a lifting crane is expensive and difficult, particularly for wind turbines which are difficult to access. Examples for wind turbines which are difficult to access are onshore wind turbines in mountainous regions or offshore wind turbines. A yaw bearing is disclosed in US 2012/224799 A1. A shim for a bearing of a wind turbine is disclosed in EP 2853733 A1.

Thus, there exists the desire to provide a concept which facilitates removing and exchanging of the front top sliding pads of a yaw bearing of a wind turbine.

This objective is solved by the independent claims. Advantageous modifications and developments are described in the dependent claims.

According to the invention, there is provided a method of removing a front top sliding pad of a yaw bearing of a wind turbine, wherein the wind turbine comprises a nacelle and a rotor. The rotor features a substantially horizontal rotor axis. The wind turbine also comprises a hub with a plurality of rotor blades. The yaw bearing connects the nacelle with a tower of the wind turbine, wherein the yaw bearing enables a rotational movement of the nacelle about a substantially vertical yaw axis. The yaw bearing comprises a first bearing component which is rigidly connected to the nacelle, and a second bearing component which is rigidly connected to the tower. The yaw bearing comprises axial adjustments to ensure that a pre-determined distance between the first bearing component and the second bearing component is maintained. The first bearing component comprises a front part, which is oriented towards the hub, and a rear part, which is oriented away from the hub. Finally, a plurality of front top sliding pads and a plurality of rear top sliding pads are attached to the first bearing component, wherein the front top sliding pads refer to top sliding pads attached to the front part of the first bearing component; and the rear top sliding pads refer to top sliding pads attached the rear part of the first bearing component.

The method comprises the following steps:
- loosening the axial adjustments of the yaw bearing such that the rotor of the wind turbine is tilted and a space in the rear part of the first bearing component is generated between the first bearing component and the second bearing component;
- inserting a lifting wedge at the rear part of the first bearing component into the space between the first bearing component and the second bearing component which is generated by the tilt of the rotor;
- rotating the first bearing component, wherein the front part of the first bearing component slides onto the lifting wedge, thus the front part of the first bearing component is lifted with regard to the second bearing component; and
- removing the front top sliding pad by benefitting of the space being generated due to the lift of the front part of the first bearing component relative to the second bearing component.

The invention is also related to a method of replacing a front top sliding pad of a yaw bearing of a wind turbine. Therefore, the above mentioned method steps are complemented by the step of inserting another front top sliding pad, after having removed the existing front top sliding pad, into the location from which the front top sliding pad has been removed.

The invention furthermore relates to a lifting wedge for a yaw bearing of a wind turbine. The lifting wedge comprises a thickness, a radial extension, a circumferential extension and circumferential ends. The lifting wedge furthermore comprises an upper surface, which is arranged and prepared to be in contact with a first bearing component of the yaw bearing; and a lower surface, which is arranged and prepared to be in contact with a second bearing component of the yaw bearing. It is essential that the thickness of the lifting wedge diminishes towards at least one of its circumferential ends. Furthermore, the lifting wedge comprises a plurality of teeth for fixing the lifting wedge to the second bearing component.

The considerable advantage of such a lifting wedge and the use thereof for yaw bearings is that the use of a heavy and powerful lifting crane for lifting the ensemble comprising the hub, the nacelle and the rotor is entirely eliminated. This obviously saves considerable material and personal efforts.

The inventors have realized that by inserting the lifting wedge, the first bearing component can be slit onto the lifting wedge. By subsequent rotation of the first bearing component, the first bearing component can be pushed and lifted upwards. This enables to slightly lift the first bearing component with regard to the second bearing component such that the front top sliding pads can be removed easily.

The inclination of the upper surface of the lifting wedge has to be optimized with regard to the specific sliding bearing for which it is foreseen. In an exemplary embodiment, the upper surface of the lifting wedge is inclined with regard to the lower surface of the lifting wedge in a range between 0.1 and 1 degree in the region of diminishing thickness of the lifting wedge. Note that in the context of this patent application, the upper surface of the lifting wedge is referred to as the surface which is arranged and prepared to be in contact with the first bearing component. Likewise, the lower surface of the lifting wedge is in the context of this patent application referred to the surface of the lifting wedge which is arranged and prepared to be in contact with the second bearing component.

Note that it is necessary to loosen the axial adjustments, which are referred to as the bottom sliding shoes in some embodiments, at least in the rear of the wind turbine in order to insert the lifting wedge between the first and the second bearing component. In this context, the "rear" of the wind turbine refers to the part which is directed away from the hub of the wind turbine with the rotor blades. Loosening the axial adjustments results in a tilt of the nacelle, which provides for the necessary space between the first bearing component and the second bearing component in the back of the yaw bearing for inserting the lifting wedge. Preferably, the axial adjustments are not only loosened in the rear, but at various or all circumferential positions of the yaw bearing.

Also note that as the gravitational force of the first bearing component acts on the top sliding pad, it can also be said that the first bearing component refers to the upper bearing component, while the second bearing component refers to the lower bearing component. The range of inclination which is exemplarily between 0.1 and 1 degree has been proven to be a preferred range. Note that the inclination is relatively little pronounced which is due to the fact that, on the one hand, it has to be ensured that the first bearing component is lifted safely and securely and, on the other hand, even a small lift of the first bearing component with regard to the second bearing component is in most cases sufficient in order to remove a worn top sliding pad. An advantage of a relatively small rate of inclination, such as the exemplarily given range of 0.1 to 1 degree, is the avoidance of high edge loads to the lifting wedge. These loads could otherwise add damage to the lifting wedge.

Alternatively, a higher rate of inclination, i.e. an angle exceeding 1 degree, could be a beneficial option if, for instance, space for inserting the lifting wedge in the bearing is limited.

In an advantageous embodiment, the upper surface of the lifting wedge comprises a thermoplastic polymer resin, in particular polyethylene terephthalate (PET). This material has the advantage that it provides for a relatively low friction between the upper surface of the lifting wedge and the first bearing component. Other options for the upper surface of the lifting wedge include polyether ether ketone (PEEK), a colorless organic thermoplastic polymer of the polyaryletherketone (PAEK) family, or other high compression resistant polymers. Even metals with the properties of providing a relatively low friction between the upper surface of the lifting wedge and the first bearing component could represent a suitable material choice for the upper surface of the lifting wedge.

In order to further reduce the friction between the upper surface of the lifting wedge and the first bearing component a lubricant such as grease for example may favorably be provided between these two contact surfaces.

It has to be ensured that the lifting wedge is kept in place after insertion. In other words, it has to be ensured that the lifting wedge does not move and slide away from the position where it has been inserted during rotation of the first bearing component. Thus, generally speaking, the lifting wedge shall comprise attachment means for fixing the lifting wedge to the second bearing component.

One example for a suitable attachment means are screws or bolts by which the lifting wedge can be firmly attached to the second bearing component and can be detached after removal of the top sliding pads.

Another example for a suitable attachment means are the provision of teeth at the lifting wedge. The teeth are designed such that they match with corresponding recesses at the second bearing component. The provision of a lifting wedge with teeth is a preferred solution as time and efforts to attach and detach screws or bolts is saved, while still ensuring a strong and reliable attachment of the lifting wedge with the second bearing component during rotation of the two bearing components relative to each other after insertion of the lifting wedge.

Both attachment means (screws/ bolts and teeth) can also be combined with each other, i.e. a toothed lifting wedge may also be (detachably) screwed to the second bearing component.

The lower surface of the lifting wedge may exemplarily feature a friction which is higher than the friction between the upper surface of the lifting wedge and the first bearing component. A preferred choice of material for the lower surface of the lifting wedge is metalized steel. Note that it may be sufficient to provide a part of the lower surface of the lifting wedge with steel. A configuration which has been proven to be advantageous in practice is to provide the core of the lifting wedge by steel and to cover the upper surface of the steel core and the sites of the lifting wedge with PET material.

The lifting wedge as described above is preferably used for a sliding yaw bearing of a wind turbine. In this case, the second bearing component may be referred to as the yaw ring of the yaw bearing and the first bearing component may be referred to as the bedframe of the yaw bearing.

Embodiments of the invention are now described, by way of example only, with reference to the accompanying drawings, of which:
- Figure 1: shows a wind turbine;
- Figure 2: shows a cross-sectional view of a part of a yaw bearing of a wind turbine;
- Figure 3: shows the status of a yaw bearing prior to applying the inventive method of removing the front top sliding pad;
- Figure 4: shows the status of the yaw bearing after loosening the axial adjustments and inserting a lifting wedge;
- Figure 5: shows the status of the yaw bearing after rotating the first bearing component of the yaw bearing assuming that all axial adjustments have been loosened;
- Figure 6: shows the status of the yaw bearing after rotating the first bearing component of the yaw bearing assuming that only the axial adjustments at the rear part of the first bearing component have been loosened;
- Figure 7: shows a side view of a part of a lifting wedge;
- Figure 8: shows a top view of the lifting wedge of Figure 7;
- Figure 9: shows a perspective view of the lifting wedge of Figure 7; and
- Figure 10: shows a perspective view of a part of the lower surface of another embodiment of a lifting wedge.

The illustration in the drawings is in schematic form. It is noted that in different figures, similar or identical elements are provided with the same reference signs.

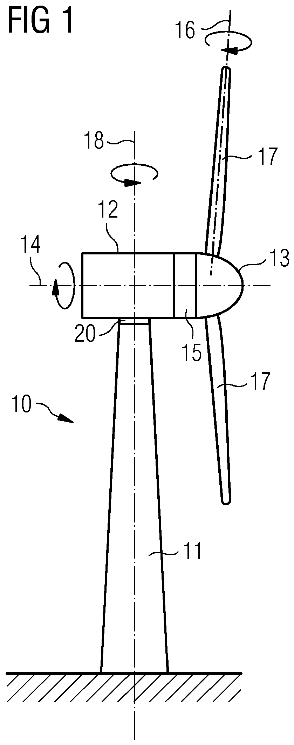

Figure 1 schematically illustrates a horizontal-axis wind turbine 10. The wind turbine 10 comprises a tower 11. At the top of the tower 11, a nacelle 12 is mounted. The nacelle 12 is rotatable connected with the tower 11 via a yaw bearing 20. The yaw bearing 20 enables a rotational movement of the nacelle 12 about a yaw axis 18, wherein the yaw axis 18 is orientated substantially vertically. In the context of this patent application, the wording "substantially vertical" in-eludes deviations up to twenty degrees, in particular up to ten degrees, with regard to a perfectly vertical orientation.

A hub 13 is rotatable connected to the nacelle 12 via a main bearing. The hub 13 is a part of the so-called rotor which transfers rotational energy from the hub 13 to a generator 15 of the wind turbine 10. A plurality of rotor blades 17 are attached to the hub 13 in order to harvest the energy from the wind. The rotor blades 17 are mounted pivotable with regard to the hub 13, i.e. the rotor blades 17 can be pivoted about a respective pitch axis 16.

The rotor comprises a rotor axis 14 which is to be understood as the rotational axis of the rotor. The rotor axis 14 is orientated substantially horizontal. In the context of this patent application, the wording "substantially horizontal" includes deviations up to twenty degrees, in particular up to ten degrees, with regard to a perfectly horizontal orientation. It is, for example, common practice to deliberately tilt the rotor axis by a few degrees towards the rear in order to avoid collision of the rotor blades 17 of the wind turbine with the tower 11.

The generator 15 is accommodated within the nacelle 12. If the rotor is directly connected to the generator 15, the wind turbine is referred to as a direct-drive, gearless wind turbine. If the rotor is connected to the generator 15 via a gear-box, the wind turbine is referred to as geared wind turbine.

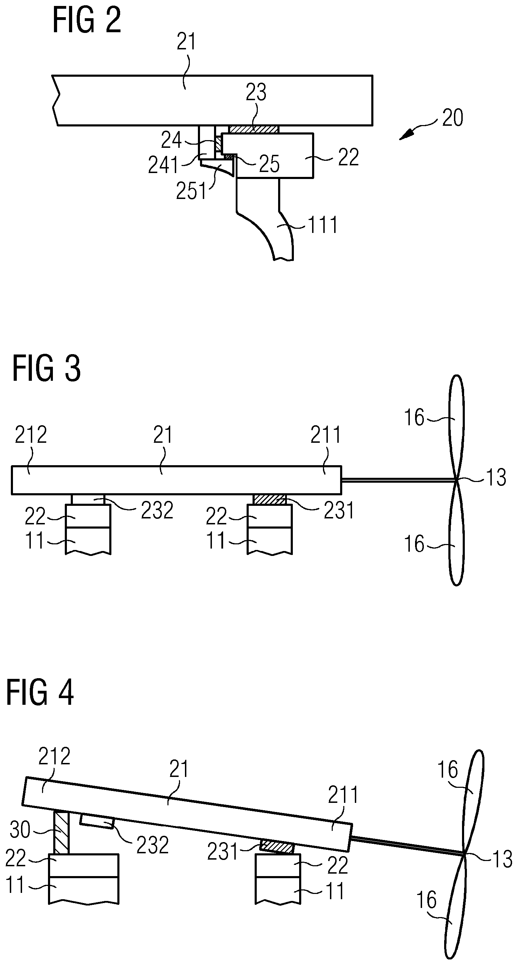

Figure 2 shows a cross-sectional view of a part of a yaw bearing 20 of a wind turbine. This yaw bearing 20 is an example of a sliding bearing for which the inventive lifting wedge can be used. The yaw bearing 20 comprises a first bearing component 21 which in the example of Figure 1 is also referred to as a bedframe. The yaw bearing 20 also comprises a second bearing component 22 which in the example of Figure 1 is represented by a yaw ring of the yaw bearing. The first bearing component 21 is located above the second bearing component 22. As a consequence, the first bearing component 21 exerts and applies its mass, i.e. its gravitational force, on the second bearing component 22. However, it does not only apply its gravitational force and load on the second bearing component 22, but in particular on the top sliding pads 23 which is squeezed between the first bearing component 21 and the second bearing component 22. In the case of modern type wind turbines of the multi mega watt class, several tons up to one hundred tons and more are placed upon the top sliding pads 23. Over the years and after many rotational movements between the first 21 and second bearing component 22 wear occurs for the top sliding pads 23.

Figure 2 also shows further components of the yaw bearing such as the radial sliding pad 24 which is secured by a radial block 241 and a bottom sliding pad 25 which is secured by the yaw clamp 251. The second bearing component 22 is connected to a tower top flange 111, which is the top part of the tower.

Figures 3 to 6 illustrate the inventive method to remove a front top sliding pad 231 of a yaw bearing of a wind turbine.

A first bearing component 21, a second bearing component 22, and two top sliding pads 231, 232 are shown in Figures 3 to 6. The first bearing component 21 comprises a front part 211, which is oriented towards the hub 13 of the wind turbine, and a rear part 212, which is oriented away from the hub 13. The second bearing component 22 is directly connected to the tower 11.

Both top sliding pads 231, 232 are attached to the first bearing component 21. The top sliding pad which is attached to the front part 211 of the first bearing component 21 is referred to as the front top sliding pad 231. Likewise, the top sliding pad which is attached to the rear part 212 of the first bearing component 21 is referred to as the rear top sliding pad 232.

Due to the weight of the rotor of the wind turbine, more gravitational force acts on the front top sliding pad compared to the rear top sliding pad. As a consequence, the front top sliding pad is generally more worn than the rear top sliding pad.

In the first step of the inventive method, the axial adjustments of the yaw bearing are loosened such that the rotor of the wind turbine is tilted and a space in the rear part 212 of the first bearing component 21 is generated between the first bearing component 21 and the second bearing component 22. The tilt of the rotor after loosening the axial adjustment means is caused because the center of gravity of the rotor is between the front top sliding pad 231 and the hub 13. In other words, the rotor is tilted forwardly after loosening the axial adjustments due to the heavy weight of the hub with the rotor blades.

The axial adjustments can, for instance, be concretely realized by yaw clamps 251 as illustrated in Figure 2. Other ways of ensuring the maintenance of a pre-determined distance between the first bearing component 21 and the second bearing component 22, i.e. other ways of ensuring that the rotor does not tilt forwardly during operation of the wind turbine, are possible, too.

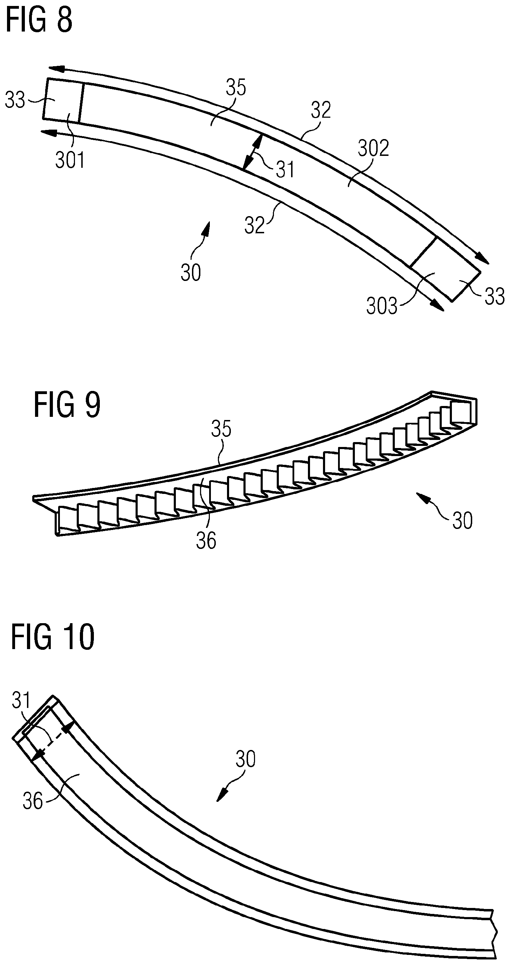

After generation of the space between both bearing components 21, 22 at the rear part 212 of the first bearing component, a lifting wedge 30 is inserted into this space. Note that the shape and placement of the lifting wedge 30 are not precisely drawn in Figure 4, as the purpose of Figures 3 to 6 is the illustration of the basic principle of the inventive method. More realistic embodiments of the lifting wedge 30 are disclosed in Figures 8 to 10.

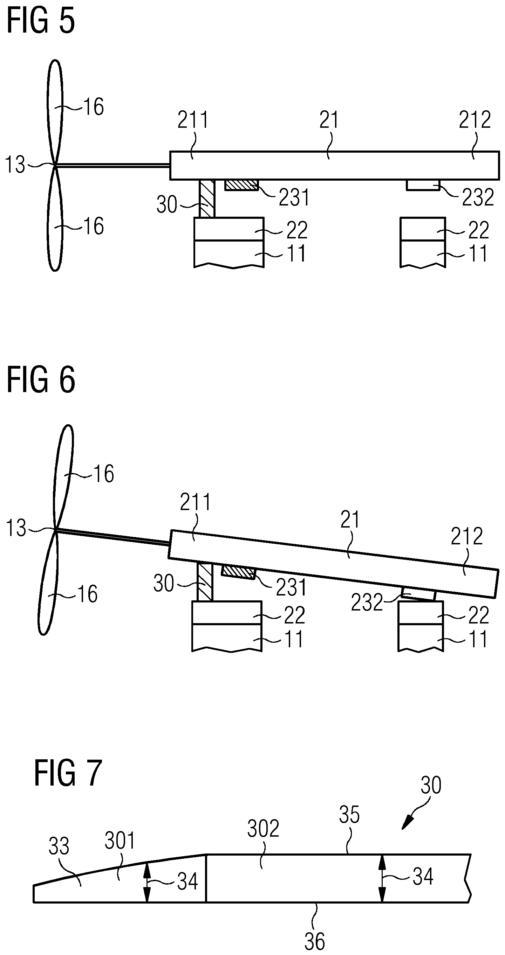

After insertion of the lifting wedge 30, the first bearing component 21, is rotated. This rotation is carried out about the axis of rotational symmetry of the first bearing component 21. This axis of rotation is substantially vertical. As a consequence of the rotation of the first bearing component 21, the front part 211 of the first bearing component 21 slides onto the lifting wedge 30. Thus, the front part 211 of the first bearing component 21 is lifted with regard to the second bearing component 22. In the example as shown in Figure 6, the first bearing component 21 - and thus also the nacelle (not shown in Figures 3 to 6), the rotor and the hub 13 with the rotor blades 16 - is rotated about approximately one hundred eighty degrees.

After completion of the rotational movement, the front part 211 of the first bearing component 21 and the front top sliding pad 231 which is attached to the first bearing component 21 are lifted and are located in proximity to the lifting wedge 30.

By benefitting of the space being generated due to the lift of the front part 211 of the first bearing component 21 relative to the second bearing component 22, the front top sliding pad 231 can then be accessed easily and removed.

Note that Figure 5 illustrates a first alternative, wherein all axial adjustments, in particular both the axial adjustments which are situated at the front part 211 of the first bearing component 21 and the axial adjustments which are situated at the rear part 212 of the first bearing component 21, are loosened. As a consequence, after rotation of the first bearing component 21, also the rear part 212 of the first bearing component 21 is lifted due to the weight of the hub 13 with the rotor blades 16, which tends to tilt the rotor forwardly.

Figure 6 illustrates a second alternative, wherein only the axial adjustments which are situated at the front part 211 of the first bearing component are loosened. Thus, the rear part 212 of the first bearing component 21 remains in close proximity to the second bearing component after rotation of the first bearing component 21. Consequently, the rotor is tilted upwardly after rotation.

Figure 7 shows a side view of a part of the lifting wedge 30. The first section 301 and a part of the second section 302 are illustrated. It can be seen that the thickness of the lifting wedge 30 starts with a specific value at the circumferential end 33 and increases until it reaches the second section 302. In other words, the thickness 34 of the lifting wedge 30 is always higher in the second section 302 compared to the thickness 34 of the lifting wedge 30 in the first section 301. As an example, the thickness may increase from 5 mm (millimeter) at the circumferential end 33 until 8.5 mm in the second section 302. An example of the circumferential extension of the first section 301 is 650 mm. In other words, this is the distance of the lifting wedge where the first bearing component slides upwards and is lifted until it reaches the second section 302 of the lifting wedge where the distance of the first and second bearing component remains constant.

Figure 8, which shows a top view on the upper surface 35 of the lifting wedge 30 illustrates the radial extension 31 and the circumferential extension 32 of the lifting wedge 30. The radial extension 31 is constant in all circumferential positions of the lifting wedge 30. The circumferential extension 32 can either be measured at the inner edge or at the outer edge of the lifting wedge 30. The lifting wedge 30 can be characterized by two circumferential ends 33, one on the top part of the drawing of Figure 8 and one on the right part of Figure 8.

Figure 8 also shows a virtual division of the lifting wedge 30 into three sections: A first section 301, a second section 302 and a third section 303. The middle section, i.e. the second section 302, is characterized by a constant thickness. In contrast, the first section 301 and the third section 303 have diminishing thickness towards the circumferential ends 33.

Figure 9 shows a perspective view on the lower surface 36 of the lifting wedge 30. The inner rim of the upper surface 35 is visible as well. Additionally, Figure 9 illustrates the teeth which are located below the lower surface 36 and which serve to firmly attach and to fix the lifting wedge 30 to the second bearing component 22.

Finally, Figure 10 shows a possible configuration regarding the material choice of the lifting wedge. It has been proven to be advantageous to provide a high friction at the lower surface 36 which may for example be realized by metalized steel. This metalized steel forms the core of the lifting wedge 30. This core is surrounded by a PET-material which provides and realizes a smaller friction. In other words, the upper surface 35, the side parts and even parts of the lower surface 36 are made of PET material.

Note, however, that in practice a lifting wedge with an upper surface such as in Figure 10 is advantageously combined with a teethed outer rim such as illustrated in Figure 9 in order to reliably ensure that the lifting wedge does not move during rotation of the second bearing component relative to the first bearing component.

It should be noted that the use of "a" or "an" throughout this application does not exclude a plurality, and "comprising" does not exclude other steps or elements.

## Claims

1. Method of removing a front top sliding pad (231) of a yaw bearing (20) of a wind turbine (10),
wherein
- the wind turbine (10) comprises a nacelle (12) and a rotor with a substantially horizontal rotor axis (14),
- the wind turbine (10) comprises a hub (13) with a plurality of rotor blades (16),
- the yaw bearing (20) connects the nacelle (12) with a tower (11) of the wind turbine (10), wherein the yaw bearing (20) enables a rotational movement of the nacelle (12) about a substantially vertical yaw axis (18),
- the yaw bearing (20) comprises a first bearing component (21) which is rigidly connected to the nacelle (12), and a second bearing component (22) which is rigidly connected to the tower (11),
- the yaw bearing (20) comprises axial adjustments to ensure that a pre-determined distance between the first bearing component (21) and the second bearing component (22) is maintained,
- the first bearing component (21) comprises a front part (211), which is oriented towards the hub (13), and a rear part (212), which is oriented away from the hub (13),
- a plurality of front top sliding pads (231) and a plurality of rear top sliding pads (232) are attached to the first bearing component (21), wherein the front top sliding pads (231) refer to top sliding pads (23) attached to the front part (211) of the first bearing component (21) and the rear top sliding pads (232) refer to top sliding pads (23) attached the rear part (212) of the first bearing component (21),
and wherein the method comprises the following steps:
- loosening the axial adjustments of the yaw bearing (20) such that the rotor of the wind turbine (10) is tilted and a space in the rear part (212) of the first bearing component (21) is generated between the first bearing component (21) and the second bearing component (22),
- inserting a lifting wedge (30) at the rear part (212) of the first bearing component (21) into the space between the first bearing component (21) and the second bearing component (22) which is generated by the tilt of the rotor,
- rotating the first bearing component (21), wherein the front part (211) of the first bearing component (21) slides onto the lifting wedge (30), thus the front part (211) of the first bearing component (21) is lifted with regard to the second bearing component (22), and
- removing the front top sliding pad (231) by benefitting of the space being generated due to the lift of the front part (211) of the first bearing component (21) relative to the second bearing component (22).

2. Method according to claim 1,
wherein the method comprises the further step of
- attaching the lifting wedge (30) to the second bearing component (22) by attachment means to ensure that the lifting wedge (30) remains in place during rotation of the first bearing component (21) relative to the second bearing component (22).

3. Method according to one of the preceding claims,
wherein the method comprises the further step of
- providing a lubricant between an upper surface (35) of the lifting wedge (30) and the first bearing component (21) such that friction between the upper surface (35) of the lifting wedge (30) and the first bearing component (21) is reduced.

4. Method according to one of the preceding claims,
wherein the first bearing component (21) is rotated by substantially one hundred and eighty degrees.

5. Method of replacing a front top sliding pad (231) of a yaw bearing (20) of a wind turbine (10),
wherein
- the wind turbine (10) comprises a nacelle (12) and a rotor with a substantially horizontal rotor axis (14),
- the wind turbine (10) comprises a hub (13) with a plurality of rotor blades (16),
- the yaw bearing (20) connects the nacelle (12) with a tower (11) of the wind turbine (10), wherein the yaw bearing (20) enables a rotational movement of the nacelle (12) about a substantially vertical yaw axis (18),
- the yaw bearing (20) comprises a first bearing component (21) which is rigidly connected to the nacelle (12), and a second bearing component (22) which is rigidly connected to the tower (11),
- the yaw bearing (20) comprises axial adjustments to ensure that a pre-determined distance between the first bearing component (21) and the second bearing component (22) is maintained,
- the first bearing component (21) comprises a front part (211), which is oriented towards the hub (13), and a rear part (212), which is oriented away from the hub (13),
- a plurality of front top sliding pads (231) and a plurality of rear top sliding pads (232) are attached to the first bearing component (21), wherein the front top sliding pads (231) refer to top sliding pads (23) attached to the front part (211) of the first bearing component (21) and the rear top sliding pads (232) refer to top sliding pads (23) attached the rear part (212) of the first bearing component (21),
and wherein the method comprises the following steps:
- removing the front top sliding pad (231) according to one of the preceding claims,
- inserting another front top sliding pad, in particular a new front top sliding pad, into the location from which the front top sliding pad (231) has been removed.

6. Method according to claim 5,
wherein the method comprises the further steps of
- rotating the second bearing component (22) back to its initial position after insertion of the other front top sliding pad,
- removing the lifting wedge (30), and
- tightening the axial adjustment means of the yaw bearing (20) .

7. Lifting wedge (30) for a yaw bearing (20) of a wind turbine (10),
wherein
- the lifting wedge (30) comprises a thickness (34), a radial extension (31), a circumferential extension (32) and circumferential ends (33),
- the lifting wedge (30) comprises an upper surface (35), which is arranged and prepared to be in contact with a first bearing component (21) of the yaw bearing (20), and a lower surface (36), which is arranged and prepared to be in contact with a second bearing component (22) of the yaw bearing (20),
- the thickness (34) of the lifting wedge (30) diminishes towards at least one of its circumferential ends (33), and
- the lifting wedge (30) comprises a plurality of teeth for fixing the lifting wedge (30) to the second bearing component (22).

8. Lifting wedge according to claim 7,
wherein the upper surface (35) of the lifting wedge (30) is inclined with regard to the lower surface (36) of the lifting wedge (30) in a range between 0.1 and 1 degree in the region of diminishing thickness (34) of the lifting wedge (30).

9. Lifting wedge (30) according to claims 7 or 8,
wherein the upper surface (35) of the lifting wedge (30) comprises a thermoplastic polymer resin, in particular polyethylene terephthalate.

10. Lifting wedge (30) according to one of the claims 7 to 9, wherein the lower surface (36) of the lifting wedge (30) at least partly consists of steel.

## Patentansprüche

1. Verfahren zum Entfernen eines vorderen oberen Gleitelements (231) eines Gierlagers (20) einer Windturbine (10),
wobei
- die Windturbine (10) eine Gondel (12) und einen Rotor mit einer im Wesentlichen horizontalen Rotorachse (14) umfasst,
- die Windturbine (10) eine Nabe (13) mit mehreren Rotorblättern (16) umfasst,
- das Gierlager (20) die Gondel (12) mit einem Turm (11) der Windturbine (10) verbindet, wobei das Gierlager (20) eine Drehbewegung der Gondel (12) um eine im Wesentlichen vertikale Gierachse (18) ermöglicht,
- das Gierlager (20) eine erste Lagerkomponente (21), die fest mit der Gondel (12) verbunden ist, und eine zweite Lagerkomponente (22) umfasst, die fest mit dem Turm (11) verbunden ist,
- das Gierlager (20) axiale Einstellmittel umfasst, damit sichergestellt ist, dass ein vorgegebener Abstand zwischen der ersten Lagerkomponente (21) und der zweiten Lagerkomponente (22) eingehalten wird,
- die erste Lagerkomponente (21) einen vorderen Teil (211), der zur Nabe (13) hin weist, und einen hinteren Teil (212) umfasst, der von der Nabe (13) weg weist,
- mehrere vordere obere Gleitelemente (231) und mehrere hintere obere Gleitelemente (232) an der ersten Lagerkomponente (21) angebracht sind, wobei die vorderen oberen Gleitelemente (231) am vorderen Teil (211) der ersten Lagerkomponente (21) angebrachte obere Gleitelemente (23) und die hinteren oberen Gleitelemente (232) am hinteren Teil (212) der ersten Lagerkomponente (21) angebrachte obere Gleitelemente (23) bezeichnen,
und wobei das Verfahren folgende Schritte umfasst:
- derartiges Lockern der axialen Einstellmittel des Gierlagers (20), dass sich der Rotor der Windturbine (10) neigt und im hinteren Teil (212) der ersten Lagerkomponente (21) ein Zwischenraum zwischen der ersten Lagerkomponente (21) und der zweiten Lagerkomponente (22) entsteht,
- Einführen eines Hebekeils (30) am hinteren Teil (212) der ersten Lagerkomponente (21) in den Zwischenraum zwischen der ersten Lagerkomponente (21) und der zweiten Lagerkomponente (22), der durch die Neigung des Rotors entsteht,
- Drehen der ersten Lagerkomponente (21), wobei der vordere Teil (211) der ersten Lagerkomponente (21) auf den Hebekeil (30) rutscht und der vordere Teil (211) der ersten Lagerkomponente (21) somit in Bezug auf die zweite Lagerkomponente (22) angehoben wird, und
- Entfernen der vorderen oberen Gleitelemente (231) durch Nutzen des aufgrund des Anhebens des vorderen Teils (211) der ersten Lagerkomponente (21) in Bezug auf die zweite Lagerkomponente (22) entstehenden Zwischenraums.

2. Verfahren nach Anspruch 1,
wobei das Verfahren den folgenden weiteren Schritt umfasst:
- Anbringen des Hebekeils (30) an der zweiten Lagerkomponente (22) mit Befestigungsmitteln, um sicherzustellen, dass der Hebekeil (30) beim Drehen der ersten Lagerkomponente (21) in Bezug auf die zweite Lagerkomponente (22) an Ort und Stelle bleibt.

3. Verfahren nach einem der vorhergehenden Ansprüche,
wobei das Verfahren den folgenden weiteren Schritt umfasst:
- Bereitstellen eines Schmiermittels zwischen einer oberen Fläche (35) des Hebekeils (30) und der ersten Lagerkomponente (21), so dass Reibung zwischen der oberen Fläche (35) des Hebekeils (30) und der ersten Lagerkomponente (21) verringert wird.

4. Verfahren nach einem der vorhergehenden Ansprüche,
wobei die erste Lagerkomponente (21) im Wesentlichen um einhundertachtzig Grad gedreht wird.

5. Verfahren zum Ersetzen eines vorderen oberen Gleitelements (231) eines Gierlagers (20) einer Windturbine (10),
wobei
- die Windturbine (10) eine Gondel (12) und einen Rotor mit einer im Wesentlichen horizontalen Rotorachse (14) umfasst,
- die Windturbine (10) eine Nabe (13) mit mehreren Rotorblättern (16) umfasst,
- das Gierlager (20) die Gondel (12) mit einem Turm (11) der Windturbine (10) verbindet, wobei das Gierlager (20) eine Drehbewegung der Gondel (12) um eine im Wesentlichen vertikale Gierachse (18) ermöglicht,
- das Gierlager (20) eine erste Lagerkomponente (21), die fest mit der Gondel (12) verbunden ist, und eine zweite Lagerkomponente (22) umfasst, die fest mit dem Turm (11) verbunden ist,
- das Gierlager (20) axiale Einstellmittel umfasst, damit sichergestellt ist, dass ein vorgegebener Abstand zwischen der ersten Lagerkomponente (21) und der zweiten Lagerkomponente (22) eingehalten wird,
- die erste Lagerkomponente (21) einen vorderen Teil (211), der zur Nabe (13) hin weist, und einen hinteren Teil (212) umfasst, der von der Nabe (13) weg weist,
- mehrere vordere obere Gleitelemente (231) und mehrere hintere obere Gleitelemente (232) an der ersten Lagerkomponente (21) angebracht sind, wobei die vorderen oberen Gleitelemente (231) am vorderen Teil (211) der ersten Lagerkomponente (21) angebrachte obere Gleitelemente (23) und die hinteren oberen Gleitelemente (232) am hinteren Teil (212) der ersten Lagerkomponente (21) angebrachte obere Gleitelemente (23) bezeichnen,
und wobei das Verfahren folgende Schritte umfasst:
- Entfernen des vorderen oberen Gleitelements (231) nach einem der vorhergehenden Ansprüche,
- Einführen eines anderen, insbesondere eines neuen, vorderen oberen Gleitelements an der Stelle, an der das vordere obere Gleitelement (231) entfernt worden ist.

6. Verfahren nach Anspruch 5,
wobei das Verfahren die folgenden weiteren Schritte umfasst:
- nach dem Einführen des anderen vorderen oberen Gleitelements Zurückdrehen der zweiten Lagerkomponente (22) in ihre Ausgangsposition,
- Entfernen des Hebekeils (30) und
- Festziehen der axialen Einstellmittel des Gierlagers (20).

7. Hebekeil (30) für ein Gierlager (20) einer Windturbine (10),
wobei
- der Hebekeil (30) eine Dicke (34), eine radiale Ausdehnung (31), eine Umfangsausdehnung (32) und Umfangsenden (33) umfasst,
- der Hebekeil (30) eine obere Fläche (35), die so angeordnet und ausgelegt ist, dass sie eine erste Lagerkomponente (21) des Gierlagers (20) berührt, und eine untere Fläche (36) umfasst, die so angeordnet und ausgelegt ist, dass sie eine zweite Lagerkomponente (22) des Gierlagers (20) berührt,
- sich die Dicke (34) des Hebekeils (30) zumindest in Richtung eines seiner Umfangsenden (33) verringert und
- der Hebekeil (30) mehrere Zähne zum Fixieren des Hebekeils (30) an der zweiten Lagerkomponente (22) umfasst.

8. Hebekeil nach Anspruch 7,
wobei die obere Fläche (35) des Hebekeils (30) in Bezug auf die untere Fläche (36) des Hebekeils (30) in dem Bereich von sich verringernder Dicke (34) des Hebekeils (30) in einem Bereich von 0,1 bis 1 Grad geneigt ist.

9. Hebekeil (30) nach Anspruch 7 oder 8,
wobei die obere Fläche (35) des Hebekeils (30) ein thermoplastisches Polymerharz, insbesondere Polyethylenterephthalat, umfasst.

10. Hebekeil (30) nach einem der Ansprüche 7 bis 9,
wobei die untere Fläche (36) des Hebekeils (30) zumindest teilweise aus Stahl besteht.

## Revendications

1. Procédé de retrait d'un patin coulissant supérieur avant (231) d'un palier de lacet (20) d'une éolienne (10), dans lequel
- l'éolienne (10) comprend une nacelle (12) et un rotor ayant un axe de rotor pratiquement horizontal (14),
- l'éolienne (10) comprend un moyeu (13) doté d'une pluralité de pales de rotor (16),
- le palier de lacet (20) relie la nacelle (12) à une tour (11) de l'éolienne (10), dans lequel le palier de lacet (20) permet un mouvement rotatif de la nacelle (12) autour d'un axe de lacet pratiquement vertical (18),
- le palier de lacet (20) comprend un premier composant de palier (21) qui est relié de manière rigide à la nacelle (12), et un second composant de palier (22) qui est relié de manière rigide à la tour (11),
- le palier de lacet (20) comprend des ajustements axiaux pour garantir qu'une distance prédéterminée entre le premier composant de palier (21) et le second composant de palier (22) est conservée,
- le premier composant de palier (21) comprend une partie avant (211), qui est orientée vers le moyeu (13), et une partie arrière (212), qui est orientée à distance du moyeu (13),
- une pluralité de patins coulissants supérieurs avant (231) et une pluralité de patins coulissants supérieurs arrières (232) sont fixés au premier composant de palier (21), dans lequel les patins coulissants supérieurs avant (231) font référence aux patins coulissants supérieurs (23) fixés à la partie avant (211) du premier composant de palier (21) et les patins coulissants supérieurs arrières (232) font référence aux patins coulissants supérieurs (23) fixés à la partie arrière (212) du premier composant de palier (21),
et dans lequel le procédé comprend les étapes suivantes :
- desserrer les ajustements axiaux du palier de lacet (20) de telle sorte que le rotor de l'éolienne (10) soit incliné et qu'un espace dans la partie arrière (212) du premier composant de palier (21) soit généré entre le premier composant de palier (21) et le second composant de palier (22),
- insérer une cale de levage (30) au niveau de la partie arrière (212) du premier composant de palier (21) dans l'espace entre le premier composant de palier (21) et le second composant de palier (22) qui est généré par l'inclinaison du rotor,
- faire tourner le premier composant de palier (21), dans lequel la partie avant (211) du premier composant de palier (21) coulisse sur la cale de levage (30), ainsi la partie avant (211) du premier composant de palier (21) est levée par rapport au second composant de palier (22), et
- retirer le patin coulissant supérieur avant (231) en bénéficiant de l'espace qui est généré en raison du levage de la partie avant (211) du premier composant de palier (21) par rapport au second composant de palier (22).

2. Procédé selon la revendication 1, dans lequel le procédé comprend l'étape supplémentaire consistant à :
- fixer la cale de levage (30) au second composant de palier (22) grâce à des moyens de fixation pour garantir que la cale de levage (30) reste en place pendant la rotation du premier composant de palier (21) par rapport au second composant de palier (22).

3. Procédé selon l'une des revendications précédentes, dans lequel le procédé comprend l'étape supplémentaire consistant à :
- fournir un lubrifiant entre une surface supérieure (35) de la cale de levage (30) et le premier composant de palier (21) de telle sorte qu'un frottement entre la surface supérieure (35) de la cale de levage (30) et le premier composant de palier (21) est réduit.

4. Procédé selon l'une des revendications précédentes, dans lequel le premier composant de palier (21) est tourné de pratiquement cent quatre-vingts degrés.

5. Procédé de remplacement d'un patin coulissant supérieur avant (231) d'un palier de lacet (20) d'une éolienne (10),
dans lequel
- l'éolienne (10) comprend une nacelle (12) et un rotor ayant un axe de rotor pratiquement horizontal (14),
- l'éolienne (10) comprend un moyeu (13) doté d'une pluralité de pales de rotor (16),
- le palier de lacet (20) relie la nacelle (12) à une tour (11) de l'éolienne (10), dans lequel le palier de lacet (20) permet un mouvement rotatif de la nacelle (12) autour d'un axe de lacet pratiquement vertical (18),
- le palier de lacet (20) comprend un premier composant de palier (21) qui est relié de manière rigide à la nacelle (12), et un second composant de palier (22) qui est relié de manière rigide à la tour (11),
- le palier de lacet (20) comprend des ajustements axiaux pour garantir qu'une distance prédéterminée entre le premier composant de palier (21) et le second composant de palier (22) est conservée,
- le premier composant de palier (21) comprend une partie avant (211), qui est orientée vers le moyeu (13), et une partie arrière (212), qui est orientée à distance du moyeu (13),
- une pluralité de patins coulissants supérieurs avant (231) et une pluralité de patins coulissants supérieurs arrières (232) sont fixés au premier composant de palier (21), dans lequel les patins coulissants supérieurs avant (231) font référence aux patins coulissants supérieurs (23) fixés à la partie avant (211) du premier composant de palier (21) et les patins coulissants supérieurs arrières (232) font référence aux patins coulissants supérieurs (23) fixés à la partie arrière (212) du premier composant de palier (21),
et dans lequel le procédé comprend les étapes suivantes :
- retirer le patin coulissant supérieur avant (231) selon l'une des revendications précédentes,
- insérer un autre patin coulissant supérieur avant, en particulier un nouveau patin coulissant supérieur avant, dans l'emplacement à partir duquel le patin coulissant supérieur avant (231) a été retiré.

6. Procédé selon la revendication 5, dans lequel le procédé comprend les étapes supplémentaires consistant à :
- faire tourner le second composant de palier (22) en retour à sa position initiale après l'insertion de l'autre patin coulissant supérieur avant,
- retirer la cale de levage (30), et
- serrer les moyens d'ajustements axiaux du palier de lacet (20).

7. Cale de levage (30) destinée à un palier de lacet (20) d'une éolienne (10),
dans laquelle
- la cale de levage (30) comprend une épaisseur (34), une extension radiale (31), une extension circonférentielle (32) et des extrémités circonférentielles (33),
- la cale de levage (30) comprend une surface supérieure (35), qui est agencée et préparée pour être en contact avec un premier composant de palier (21) du palier de lacet (20), et une surface inférieure (36), qui est agencée et préparée pour être en contact avec un second composant de palier (22) du palier de lacet (20),
- l'épaisseur (34) de la cale de levage (30) diminue vers au moins une de ses extrémités circonférentielles (33), et
- la cale de levage (30) comprend une pluralité de dents pour fixer la cale de levage (30) au second composant de palier (22).

8. Cale de levage selon la revendication 7, dans laquelle la surface supérieure (35) de la cale de levage (35) est inclinée par rapport à la surface inférieure (36) de la cale de levage (30) dans une plage comprise entre 0,1 et 1 degré dans la région de diminution de l'épaisseur (34) de la cale de levage (30) .

9. Cale de levage (30) selon la revendication 7 ou 8, dans laquelle la surface supérieure (35) de la cale de levage (30) comprend une résine polymère thermoplastique, en particulier du téréphtalate de polyéthylène.

10. Cale de levage (30) selon l'une des revendications 7 à 9, dans laquelle la surface inférieure (36) de la cale de levage (30) se compose au moins partiellement d'acier.
